Europäisches Patentamt

European Patent Office

Office européen des brevets

(11) Publication number: **0 473 847 A1**

# EUROPEAN PATENT APPLICATION

(21) Application number: **90309672.5**

(22) Date of filing: **04.09.90**

(51) Int. Cl.5: **A01G 9/10**

(43) Date of publication of application:
**11.03.92 Bulletin 92/11**

(84) Designated Contracting States:
**AT BE CH DE DK ES FR GB GR IT LI LU NL SE**

(71) Applicant: **Sakanaka, Toshio**
**112, Mogami, Oaza, Momoyama-cho**
**Naga-gun, Wakayama-ken(JP)**

(72) Inventor: **Sakanaka, Toshio**
**112, Mogami, Oaza, Momoyama-cho**
**Naga-gun, Wakayama-ken(JP)**

(74) Representative: **Hillier, Peter et al**
**Reginald W. Barker & Co., 13, Charterhouse**
**Square**
**London, EC1M 6BA(GB)**

(54) **A case for raising seedlings.**

(57) A case (1) for raising seedlings (7) is formed into a cylindrical or globe shape to wrap over roots of plants and is made of a fabric (3) woven into a net of water-soluble and/or corrodible fiber or of a non-woven fabric made of water-soluble and/or corrodible fiber or of a water soluble and/or corrodible porous sheet (8). The water-soluble and/or corrodible porous sheet can be expanded to be a net and has a plurality of holes (9) therethrough. The corrodible fiber is a fiber from a kind of plant, such as hemp.

## BACKGROUND OF THE INVENTION

This invention relates to a case for raising seedlings.

It is known in the art to initially raise seedlings one by one, each in a case made of a synthetic resin for raising seedlings and then move the raised seedlings to the desired place. However, using a case made of synthetic resin has a problem that it is apt to cause a lack of oxygen and poor drainage because of no ventilation, which may cause incomplete development and rottenness of roots.

To solve the problem, this inventor proposed a case for which an application was filed in Japan on December 26, 1986 as Japanese Patent Application No. 59-53836. The case for raising seedlings in that application is formed from non-woven fabric made of synthetic resin in order to prevent incomplete development and rottenness of roots.

However, such a case for raising seedlings formed from non-woven fabric made of synthetic resin which is described as above has a problem that it slows development of the roots and weakens them because the roots are not able to stretch out of the case but are confined inside of the case.

Further, as the above described case does not rot, it has another problem that it will remain in the ground to be a cause of environmental pollution if the case, together with the raised seedlings, are transplanted into the ground.

Therefore, the case is always removed and only the raised seedlings are transplanted in the desired place. However, because the raised roots have stretched and expanded in the inside of the non-woven fabric made of synthetic resin, it takes a lot of time and effort to take them gently out of the case. Consequently, at the time of transplanting, most of those roots that are inside of the unwoven fabric made of synthetic resin are cut off or injured.

## OBJECT AND SUMMARY OF THE INVENTION

An object of this invention is to provide a case for raising seedlings which prevents incomplete development and shows a high efficiency in transplanting work.

To achieve the above object, a case for raising seedlings according to this invention is formed of a fabric characterized by its ventilation and drainage which is made from water-soluble and/or corrodible fiber, and has a cylindrical or globe shape so as to wrap over the roots of plants.

As a seedling raised in a case for raising seedlings formed of a fabric characterized by its ventilation and drainage is able to stretch its roots through the case, those roots would not be confined to only the inside of the case.

Further, the roots will grow without rotting even when they are repeatedly watered, because a case for raising seedlings according to this invention is characterized by its good ventilation and drainage.

Furthermore, a case for raising seedlings according to this invention itself is planted into the ground together with its contents in the desired place when transplanting the seedlings.

As the case will rot or decompose after some time, it will not prevent the development of the roots in the future.

## BRIEF DESCRIPTION OF THE DRAWINGS

The above and other objects and the attendant advantages of the present invention will become readily apparent by reference to the following detailed description when considered in conjunction with the accompanying drawings wherein:

Fig. 1 and Fig. 2 show a first embodiment of this invention in which: Fig. 1 is a perspective view of a case for raising seedlings which is composed of net-like knitted fabric of natural hemp, and

Fig. 2 is a notching of a front view of the case for raising seedlings illustrated in Fig. 1 in use.

Fig. 3 through Fig. 6 show a second embodiment of this invention in which: Fig. 3 is a perspective view of a synthetic resin sheet which is water-soluble and corrodible, and

Fig. 4 is a perspective view of the synthetic resin sheet illustrated in Fig. 3 which has a lot of openings in it.

Fig. 5 is a perspective view of a case for raising seedlings composed of the synthetic resin sheet having a lot of openings in it as illustrated in Fig. 4.

Fig. 6 is a perspective view of an alternative net-like synbtghetic sheet which can be made into a case similar to that shown in Fig. 5.

## DETAILED DESCRIPTION OF THE PREFERRED EMBODIMENTS

The preferred embodiments of the present invention will by below described in detail with reference to the drawings.

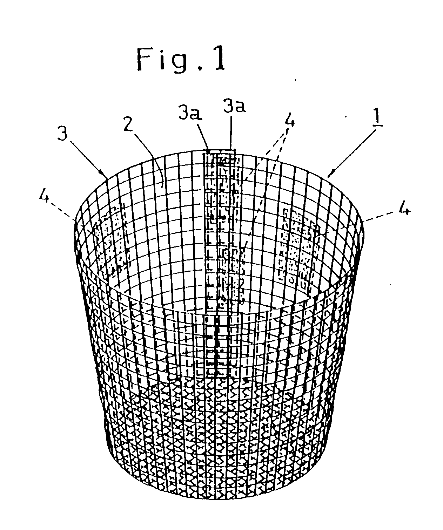

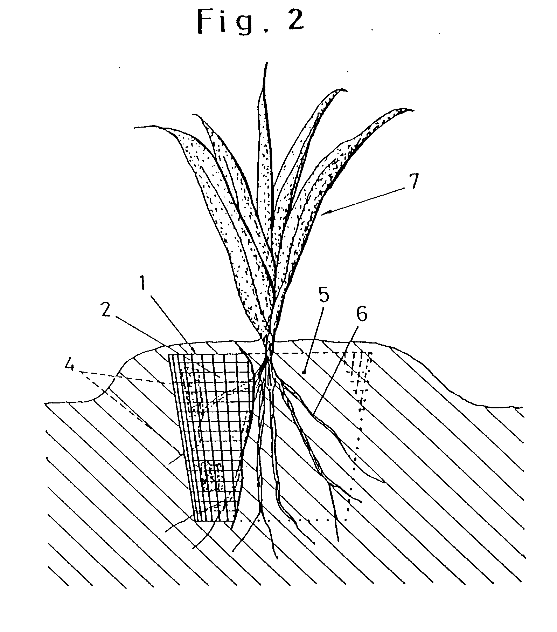

Fig. 1 and Fig. 2 show the first embodiment.

A case 1 for raising seedlings in this embodiment is made of natural hemp which is knitted into a fabric 3 having each stitch 2 of which be comparatively large. The fabric 3 is bent into a cylinder having a narrower bottom. Crude rubber 4 is applied partially where the edges 3a of the fabric 3 are wrapped over each other. The crude rubber 4 is melted by heat or some solvent to weld the edges 3a together.

The welding by crude rubber 4 could be substituted by fastening by a rope, twine, staples, or the like. It is highly desirable that the means for fastening be water-soluble and/or corrodible.

Further, the case 1 for raising seedlings can be formed of several piles of the fabric 3.

The function of the case 1 for raising seedlings formed as above is described as follows. First of all, the case 1 for raising seedlings is filled with culture soil 5, such as conventionally known potting soil. Seeds are planted in the case 1 and watered in the culture soil 5 filling the case 1. The seeds germinate and extend their roots into the culture soil 5.

At this time, the roots grow in a good condition without rotting since the comparatively large stitches 2 of the case 1 for raising seedlings allow the water to go through and get enough air inside of the case 1.

After the seedlings 7 grow enough to be transplanted, the case 1 for raising seedlings together with the seedlings is buried in a hole dug in a desired place.

The case 1 for raising seedlings buried in the ground melts or breaks down into its constituent elements to disappear by repeated watering or by activity of bacteria in the culture soil 5 or by other natural corrosive agents in the culture soil 5 or the surrounding soil.

For instance, the case 1 for raising seedlings made from a plant fiber such as hemp as described in this embodiment is broken down completely after about 8 months to two years and the rotted and fused plant fiber from the case also works as manure. As a result, the roots from the seedlings will spread into the ground around.

Accordingly, though the case 1 for raising seedlings described in the above embodiment is made from a plant fiber such a hemp, it can be made of a fabric made from water-soluble synthetic resins such as polyvinyl alcohol.

Further, crude rubber 4 can be applied over a broader area of the case 1 in order to delay the rate of break down of the material forming the case 1 for raising seedlings and to keep the shape of the case longer.

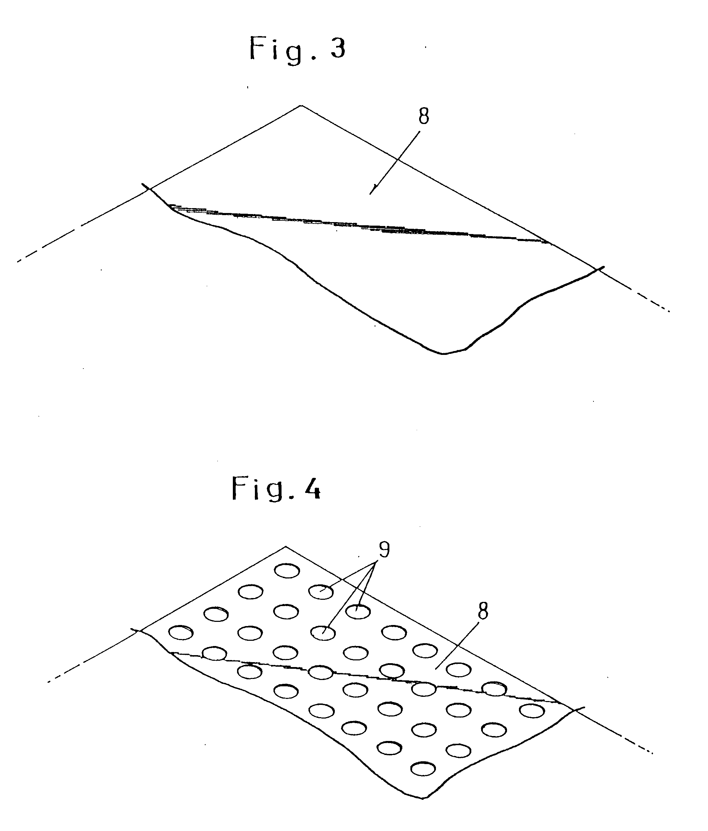

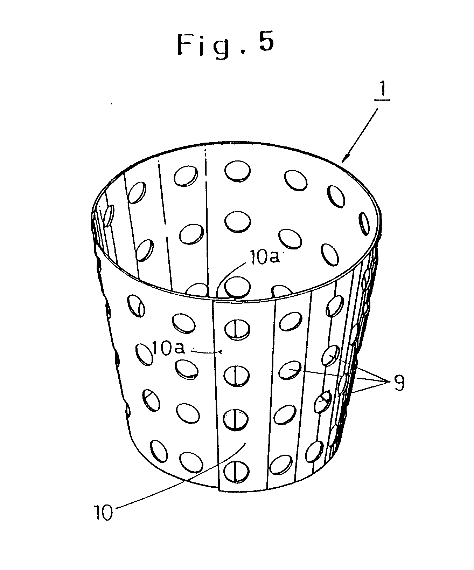

The second embodiment referring to the present invention is shown in Fig. 3 through 5. In this embodiment, a sheet 8 is made from a permanent gum such as amylum or glue or a synthetic resin such as polyvinyl alcohol as shown in Fig. 3. Next, as shown in Fig. 4, a lot of openings 9 are made in the sheet 8, and then a porous construction sheet 10 is formed. The porous construction sheet 10 is bent into a cylinder having a narrower bottom. The edges 10a of the porous construction sheet 10 are wrapped over each other and connected as shown in Fig. 5.

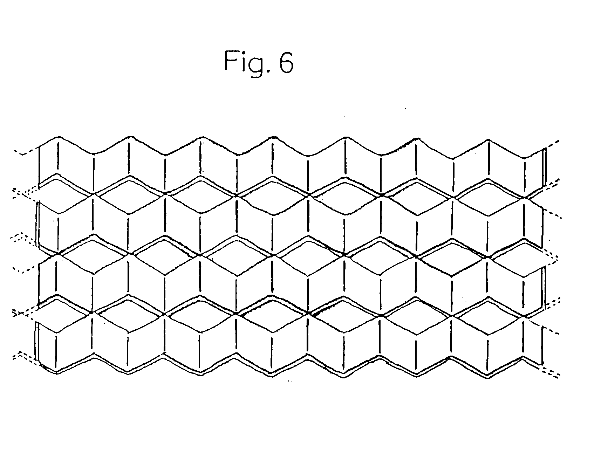

As an alternative, the porous sheet 8 can be appropriately cut and expanded to be a net or a net-like construction sheet 11 as shown in Fig. 6 and then formed into a case.

The other constructional details and the function of the case for raising seedlings in the second embodiment and alternative are the same as those of a case for raising seedlings described in the first embodiment.

It is readily apparent that the above-described has the advantage of wide commercial utility. It should be understood that the specific form of the invention hereinabove described is intended to be representative only, as certain modifications within the scope of these teachings will be apparent to those skilled in the art.

Accordingly, reference should be made to the following claims in determining the full scope of the invention.

## Claims

1. A case for raising seedlings formed into a cylindrical or globe shape to wrap over roots of plants made of a fabric woven into a net of water-soluble and/or corrodible fiber.

2. A case for raising seedlings formed into a cylindrical or globe shape to wrap over roots of plants made of a non-woven fabric made of water-soluble and/or corrodible fiber.

3. A case for raising seedlings formed into a cylindrical or globe shape to wrap over roots of plants made from a water soluble and/or corrodible porous sheet.

4. A case for raising seedlings as claimed in claim 3 wherein said water-soluble and/or corrodible porous sheet is expanded to be a net.

5. A case for raising seedlings as claimed in claim 3 wherein said water-soluble and/or corrodible porous sheet has a plurality of holes therethrough.

6. A case for raising seedlings as defined in claim 1, wherein said corrodible fiber is a fiber from a kind of plant.

7. A case for raising seedlings as defined in claim 2, wherein said corrodible fiber is a fiber from a kind of plant.

# Fig.1

# Fig. 2

Fig. 3

8

Fig. 4

9

8

Fig.5

Fig. 6

European
Patent Office

**EUROPEAN SEARCH
REPORT**

Application Number

**EP 90 30 9672**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 186 730   (GRANT)<br>* page 1, line 18 - page 2, line 33; figures 4,5 *<br>– – – | 1,6 | A 01 G 9/10 |
| X | EP-A-0 082 653   (THE WIGGINS TEAPE GROUP)<br>* page 2, line 15 - page 7, line 4 *<br>– – – | 2-4 | |
| X | US-A-2 688 209   (ADAMS)<br>* column 3, line 46 - line 74 *<br>– – – | 1,2,6,7 | |
| X | DE-A-1 611 734   (MÜLTIN)<br>* the whole document *<br>– – – | 2 | |
| A | US-A-3 844 987   (CLENDINNING)<br>* column 2, line 14 - column 3, line 48 *<br>– – – – – | | |
| | | | **TECHNICAL FIELDS SEARCHED (Int. Cl.5)**<br><br>A 01 G |

The present search report has been drawn up for all claims

| Place of search | Date of completion of search | Examiner |
|---|---|---|
| The Hague | 18 April 91 | HERYGERS J.J. |